# EUROPÄISCHE PATENTSCHRIFT

(11) **EP 0 437 753 B1**
(45) Veröffentlichungstag und Bekanntmachung des Hinweises auf die Patenterteilung: **19.05.1993**
(21) Anmeldenummer: 90124348.5
(22) Anmeldetag: 15.12.1990
(51) Int. Cl.: B27G 19/10

(54) **Verfahren und Vorrichtung zum Trennen von beschichteten Werkstücken aus Holz oder dgl.**
Method and apparatus for cutting coated workpieces of wood or the like
Procédé et dispositif pour couper des plaques de bois recouverts d'une feuille

(30) Priorität: 18.01.1990 DE 4001331
(43) Veröffentlichungstag der Anmeldung: 24.07.1991
(73) Patentinhaber: Karl M. Reich, Maschinenfabrik GmbH, 72607 Nürtingen (DE)
(72) Erfinder: Kuhn, Reiner, W-7440 Nürtingen (DE); Weingart, Michael, W-7312 Kirchheim (DE)

(56) Entgegenhaltungen:
- EP-A- 0 273 200
- DE-A- 3 606 525
- DE-A- 3 644 925
- DE-C- 378 399
- GB-A- 2 096 942

## Beschreibung

Die Erfindung bezieht sich auf ein Verfahren und eine Vorrichtung zum Trennen von beschichteten Werkstücken aus Holz oder dgl. gemäß Oberbegriff von Anspruch 1 und 2.

Beim Durchtrennen von plattenförmigen Werkstücken aus Holz oder dgl., z.B. von Spanplatten mit einer Deckschicht aus Kunststoff oder Hartpapier mit einer Handkreissäge, ist es aus der DE-OS 38 00 935 bekannt, die Deckschicht zunächst mit einem besonderen, mit der Handkreissäge verbundenen Vorritz-Sägeblatt im Gleichlauf zu durchsägen. Dadurch wird verhindert, daß die spröde Deckschicht durch das im Gegenlauf arbeitende Trenn-Sägeblatt ausreißt und splittert.

Zur Ausführung von einwandfrei geraden Sägeschnitten ist es ebenfalls bekannt, die Handkreissäge auf ein Führungslineal aufzusetzen, wobei eine Nut in der Grundplatte der Handkreissäge mit einer Rippe des Führungslineals zusammenwirkt.

Bei dieser bekannten, mit einer Handkreissäge verbundenen Ritzvorrichtung ist ein getrenntes Sägeblatt notwendig, dessen Lagerung und Antrieb die Handkreissäge verteuert und deren Gewicht erhöht.

Aufgabe der vorliegenden Erfindung ist daher die Schaffung eines Verfahrens zum Trennen von beschichteten Werkstücken aus Holz oder dgl., ohne daß die Deckschicht beschädigt wird, wobei dieses Verfahren mit einer möglichst preiswerten und einfachen Handkreissäge ausgeführt werden soll.

Diese Aufgabe wird erfindungsgemäß gelöst durch die Merkmale im Kennzeichen der Ansprüche 1 und 2.

Bei dem erfindungsgemäßen Verfahren wird also auch das Trenn-Sägeblatt zum Vorritzen im Gleichlauf verwendet, ein zusätzliches Vorritz-Sägeblatt mit Antrieb entfällt.

Des Sägeblatt wird vielmehr durch eine einfache Verschiebevorrichtung in die gewünschte Vorritzstellungen gebracht, sodaß nach Ausführung dieser Vorritz-Schnitte der endgültige Trennschnitt im Gegenlauf ohne Beschädigung der Deckschicht durchgeführt werden kann.

Zur Einstellung der Vorritztiefe dient ein Vorritzanschlag, der ein sicheres Arbeiten gewährleistet und der verhindert, daß beim Vorritzen im Gleichlauf mit voller Schnittiefe das Werkstück vom Sägeblatt berührt wird. Zum Einstellen der vollen Schnittiefe muß nämlich dieser Vorritzanschlag vom Bedienungsmann in seine Freigabestellung verbracht werden.

Ein weiterer Vorteil dieses Vorritzanschlages besteht darin, daß die Vorritztiefe bei einem Wechsel des Sägeblatts, bei nachgeschliffenen Sägeblättern oder bei verschieden dicken Deckschichten entsprechend eingestellt werden kann.

Soll das Werkstück nur besäumt werden, dann gehört der Säumling mit seiner Deckschicht zum Abfall und es ist nur nötig, einen Vorritzgang durchzuführen. Dies ist der häufigste Anwendungsfall und der Arbeitsablauf wird damit erheblich verkürzt.

Bei der Ausführung von Gehrungsschnitten schwingt das Sägeblatt in Richtung Führungslineal, sodaß es nötig ist, die Handkreissäge quer zu diesem Führungslineal zu verschieben. Diese Querverschiebung ist in den Unteransprüchen der Erfindung gekennzeichnet, sodaß die erfindungsgemäße Handkreissäge sowohl zum Vorritzen als auch zur Ausführung von Gehrungsschnitten verwendet werden kann.

Im Folgenden ist ein Ausführungsbeispiel der Erfindung unter Bezugnahme auf die Zeichnungen näher beschrieben:

Es zeigen:
- Fig. 1: Handkreissäge von vorne, Teilschnitt nach Linie I-I in Fig. 2
- Fig. 2: Konsole mit Führungsschuh, von oben, Teilschnitt nach Linie II-II in Fig. 1
- Fig. 3: Handkreissäge von der Motorseite, Schnitt nach Linie III-III in Fig. 1
- Fig. 4: Vorritzanschlag von oben, teilweise geschnitten nach Linie IV-IV in Fig. 3

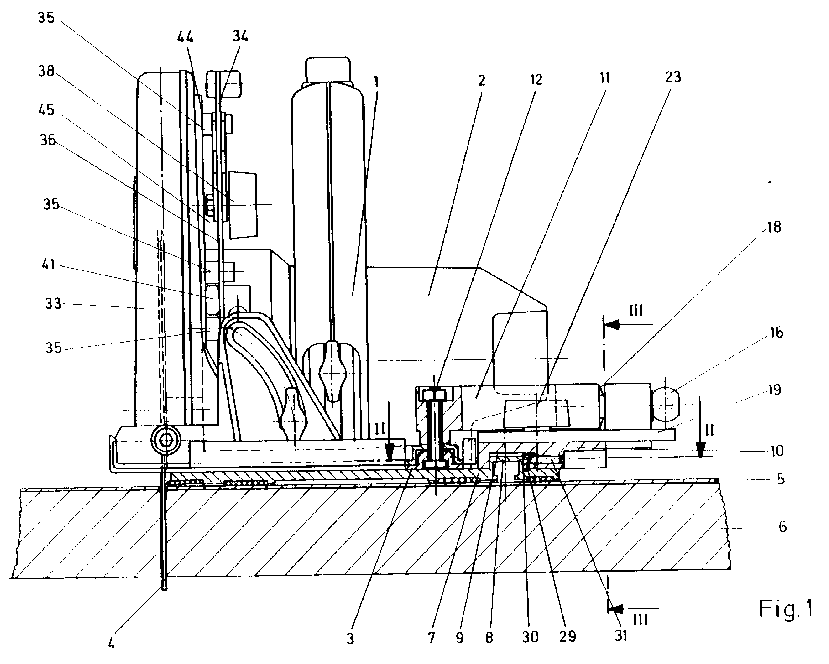

Bei der in Fig. 1 von vorne dargestellten Handkreissäge 1 handelt es sich um eine sogenannte Eintauchsäge, bei der ein Motorgehäuse 2 schwenkbar auf einer Grundplatte 3 gelagert ist.

Ein Sägeblatt 4 dient zum Vorritzen der Deckschicht 5 und zum Durchtrennen des gesamten Querschnitts des Werkstücks 6.

Zur Gewährleistung von einwandfrei geraden Sägeschnitten dient ein auf das Werkstück 6 auflegbares Führungslineal 7, dessen Führungsrippe 8 in eine Führungsrinne 9 eines mit der Grundplatte 3 verbundenen Führungsschuhs 10 eingreift.

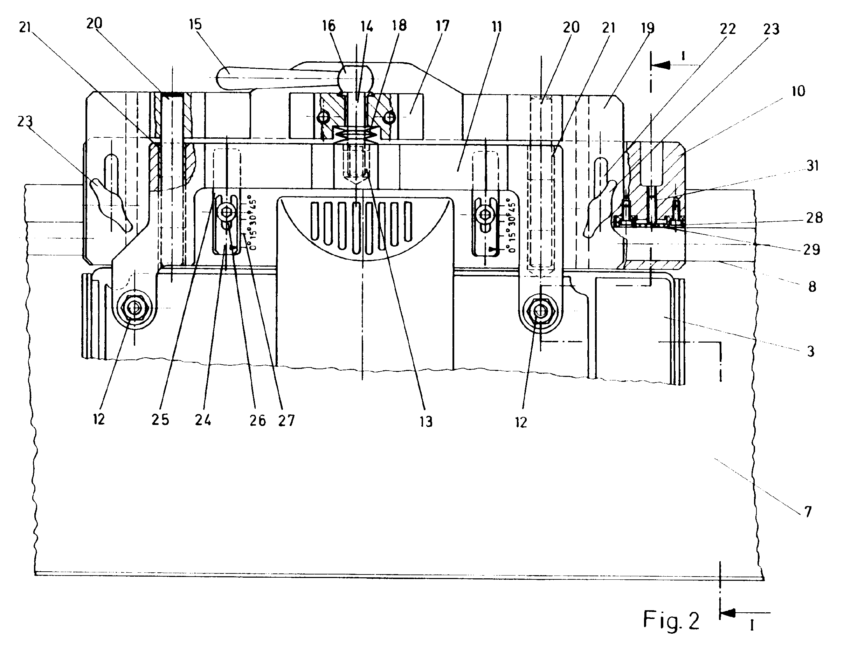

Wie auch Fig. 2 zeigt, dient zum Halten des Führungsschuhs 10 eine Konsole 11, die mit Schrauben 12 an der Grundplatte 3 abnehmbar befestigt ist.

Die Konsole 11 ist mit einem Muttergewinde 13 versehen, in die ein Gewindebolzen 14 schraubbar eingreift. Er ist mit einem Hebel 15 mit Auge 16 versehen, gegen das ein mit dem Führungsschuh 10 verbundener Klotz 17 durch ein Paket von Tellerfedern 18 gepresst wird.

Zwischen Führungsschuh 10 und Konsole 11 ist eine Einstellplatte 19 angeordnet, auf der der Klotz 17 befestigt ist. Mit der Einstellplatte 19 sind ferner zwei Führungsbolzen 20 verbunden, die verschiebbar in Führungsbohrungen 21 der Konsole 11 eingreifen. Damit ist der Führungsschuh 10 durch Betätigung von Hebel 15 quer zum Sägeblatt 4 verschiebbar an der Grundplatte 3 gelagert.

Die Einstellplatte 19 weist quer zum Sägeblatt 4 verlaufende Schlitze 22 auf, in die mit dem Führungsschuh 10 verbundene Schrauben 23 eingreifen.

Der Führungsschuh 10 ist ferner mit Anschlagelementen 24 versehen, die in Aussparungen 25 der Einstellplatte 19 eingreifen und mit Langlöchern 26 versehen sind. Sie dienen als Anschlag und als Winkelanzeiger bei Gehrungsschnitten, wofür die Einstellplatte 19 im Bereich der Anschlagelemente 24 mit einer Winkelskala 27 versehen ist.

Zur Verhinderung des Laufspiels zwischen Führungslineal 7 und Führungsschuh 10 dient ein Einsatz 28 aus elastischem Kunststoff, der in einer Unterbrechung des Führungsschuhs 10 so befestigt ist, daß ein geschwächter Wandbereich 29 einen Teil der Seitenwand 30 des Führungsschuhs 10 bildet. Eine Stellschraube 31 wirkt so mit dem Wandbereich 29 zusammen, daß dieser in gewünschter Weise in Richtung Führungsrippe 8 eingestellt werden kann, sodaß das Laufspiel nahezu aufgehoben wird.

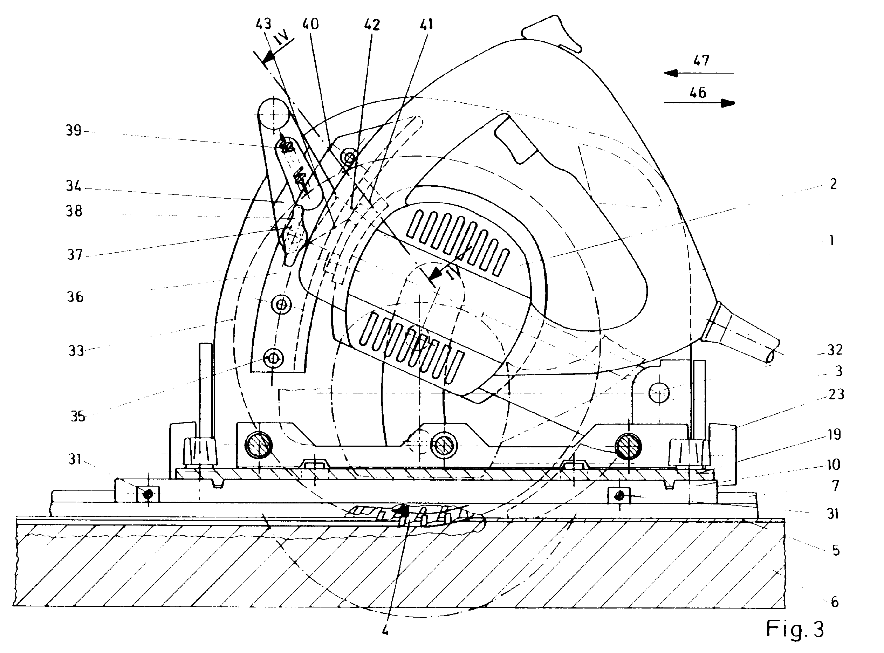

Die Fig. 3 zeigt die als Eintauchsäge ausgebildete Handkreissäge 1, an deren Grundplatte 3 das Motorgehäuse 2 mit Sägeblatt 4 um die Schwenkachse 32 schwenkbar gelagert ist und mit deren Grundplatte 3 eine das Sägeblatt 4 umgebende Schutzhaube 33 fest verbunden ist.

Zum Einstellen des Sägeblatts 4 auf die gewünschte Vorritztiefe dient ein Vorritzanschlag in Form eines Schwenkhebels 34, der an der Schutzhaube 33 schwenkbar gelagert ist.

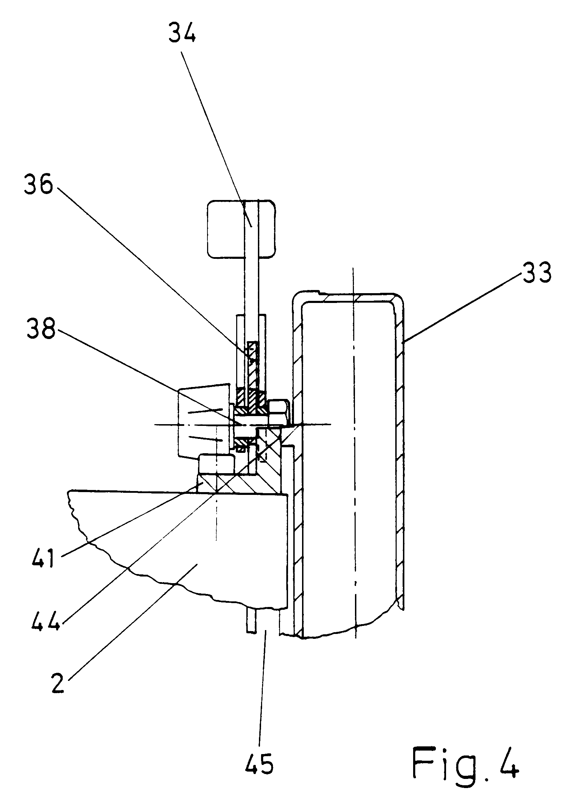

Wie auch Fig. 4 zeigt, ist an Augen 35 der Schutzhaube 33 eine Führungsplatte 36 befestigt, die ein Langloch 37 aufweist. In diesem Langloch 37 ist mit einer Einstellschraube 38 der Schwenkhebel 34 schwenkbar und in Höhenrichtung einstellbar gelagert. Er wird durch eine an der Führungsplatte 36 befestigte Zugfeder 39 in Richtung Motorgehäuse 2 gezogen, bis er an einer Fläche 40 von Führungsplatte 36 anliegt. Mit dem Motorgehäuse 2 ist ein Anschlagelement 41 verbunden, das beim Eintauchen von Sägeblatt 4 in seine Vorritzstellung an einer Anschlagnase 42 von Schwenkhebel 34 anschlägt (Fig. 3).

Zur Ausführung des endgültigen Trennschnitts des gesamten Werkstückquerschnitts wird der Schwenkhebel 34 im Gegenuhrzeigersinn so verschoben, daß die Anschlagnase 42 das Anschlagelement 41 freigibt und das Motorgehäuse 2 in die gewünschte Eintauchstellung verschwenkt werden kann.

Der Schwenkhebel 34 ist mit einer schrägen Anlauffläche 43 versehen, mit der das Anschlagelement 41 beim Zurückschwenken des Motorgehäuses 2 zusammenwirkt und den Schwenkhebel 34 so nach außen bewegt, daß das Anschlagelement 41 wieder über die Anschlagnase 42 gelangen kann.

Wie Fig. 4 zeigt, ist die Schutzhaube 33 mit einer Führungsfläche 44 versehen, die zusammen mit der Führungsplatte 36 einen Führungsschlitz 45 bildet. In diesen Führungsschlitz 45 greift das Anschlagelement 41 so ein, daß das Motorgehäuse 2 und damit das Sägeblatt 4 während des Sägevorgangs sicher geführt wird.

Zur Ausführung des erfindungsgemäßen Verfahrens wird die Handkreissäge 1 zunächst durch Umlegen von Hebel 15 in die in Fig. 2 gezeigte Stellung ca. 0,6 mm quer zur Grundplatte 3 verschoben.

Das Motorgehäuse 2 wird aus seiner Ruhestellung im Gegenuhrzeigersinn verschwenkt bis Anschlagelement 41 an der Anschlagnase 42 anschlägt (Fig. 3), damit überragt das Sägeblatt 4 das Führungslineal 7 nach unten um ca. 3 mm. In dieser Stellung des Sägeblatts 4 wird die Handkreissäge 1 entlang dem Führungslineal 7 entgegen dem endgültigen Trennschnitt im Gleichlauf gemäß Pfeil 46 so über das Werkstück 6 geführt, daß die Deckschicht 5 vollständig durchsägt wird.

Durch Umlegen von Hebel 15 um 180° wird die Handkreissäge quer zur Grundplatte 3 in ihre zweite Vorritzstellung so verschoben, daß bei einem zweiten Durchgang der Handkreissäge 1 wieder im Gleichlauf (Pfeil 46) die Deckschicht 5 gegenüber dem ersten Sägeschnitt durchgesägt wird. Damit ist über die Deckschicht 5 hinaus eine Nut entstanden, die die Blattdicke von Sägeblatt 4 nach beiden Seiten um max. 0,3 mm überragt. Hebel 15 wird jetzt in eine senkrechte Stellung verschwenkt, wobei die Handkreissäge 1 in eine Mittelstellung zwischen den beiden Vorritzstellungen verschoben wird.

Nach Verschwenken von Vorritzanschlag 34 entgegen Uhrzeigersinn kann das Motorgehäuse 2 mit Sägeblatt 4 bis zu einem nicht dargestellten Anschlag so in eine strichpunktiert gezeichnete Stellung verschwenkt werden, daß es möglich ist, das Werkstück 6 im Gegenlauf gemäß Pfeil 47 völlig zu durchtrennen.

## Patentansprüche

1. Verfahren zum Trennen von beschichteten Werkstücken aus Holz oder dgl. mit einer entlang eines Führungslineals führbaren Handkreissäge (1) mit einem Motorgehäuse (2) mit antreibbarem Sägeblatt (4), das an einer Grundplatte (3) höhenverstellbar gelagert ist und mit einem mit dem Führungslineal (7) zusammenwirkenden, an der Grundplatte quer zur Sägerichtung verschiebbar gelagerten Führungsschuh (10), gekennzeichnet durch die Verfahrensschritte:
a) Durchsägen der Deckschicht (5) des Werkstücks (6) im Gleichlauf mit einer ersten Vorritzstellung des Sägeblatts (4)
b) Durchsägen der Deckschicht (5) des Werkstücks (6) im Gleichlauf mit einer zur ersten Vorritzstellung quer zur Sägerichtung verschobenen zweiten Vorritzstellung des Sägeblatts (4)
c) Durchtrennen des gesamten Querschnitts des Werkstücks (6) im Gegenlauf mit einer zwischen der ersten und zweiten Vorritzstellung liegenden Trennstellung des Sägeblatts (4).

2. Handkreissäge zur Durchführung des Verfahrens gemäß Anspruch 1, **dadurch gekennzeichnet,** daß mit der Grundplatte (3) der Handkreissäge (1) eine Konsole (11) verbunden ist, an der der Führungsschuh (10) mit Führungsrinne (9) quer zum Sägeblatt (4) verschiebbar gelagert ist.

3. Handkreissäge nach Anspruch 2, **dadurch gekennzeichnet,** daß zwischen Konsole (11) und Führungsschuh (10) ein Verstellorgan (14) vorgesehen ist.

4. Handkreissäge nach Anspruch 3, **dadurch gekennzeichnet,** daß das Verstellorgan (14) als Gewindebolzen ausgebildet ist, der in ein Muttergewinde (13) der Konsole (11) eingreift.

5. Handkreissäge nach einem der Ansprüche 2 bis 4, **dadurch gekennzeichnet,** daß zwischen Konsole (11) und Führungsschuh (10) ein Federelement (18) vorgesehen ist.

6. Handkreissäge nach einem der Ansprüche 2 bis 5, **dadurch gekennzeichnet,** daß zwischen Konsole (11) und Führungsschuh (10) eine quer zum Sägeblatt (4) verschiebbare Einstellplatte (19) angeordnet ist, die mittels des Verstellorgans (14) einstellbar an der Grundplatte (3) gelagert ist und daß der Führungsschuh (10) quer zum Sägeblatt (4) verschieb- und feststellbar an der Einstellplatte (19) gelagert ist.

7. Handkreissäge nach Anspruch 6, **dadurch gekennzeichnet,** daß mit Führungsschuh ( 10) Anschlagelemente (24) verbunden sind, die als Anschlag- und Winkelanzeige mit einer Winkelskala (27) dienen.

8. Handkreissäge nach einem der Ansprüche 2 bis 7, **dadurch gekennzeichnet,** daß eine Seitenwand (30) der Führungsrinne (9) teilweise einen geschwächten Querschnitt (29) aufweist, mit dem eine Stellschraube (31) zur Beeinflußung des Laufspiels zwischen Führungsschuh (10) und Führungslineal (7) zusammenwirkt.

9. Handkreissäge nach Anspruch 8, **dadurch gekennzeichnet,** daß im Führungsschuh (10) im Bereich der Seitenwand (30) mindestens ein Einsatz (28) aus elastischem Kunststoff befestigt ist, der an einer gegen die Führungsrinne (9) gerichteten Seitenwand (30) einen geschwächten Querschnitt (29) aufweist , mit dem die Stellschraube (31) zusammenwirkt.

10. Handkreissäge nach einem der Ansprüche 2 bis 9, mit einer mit der Grundplatte (3) fest verbundenen Schutzhaube (33), **dadurch gekennzeichnet,** daß an der Schutzhaube (33) ein Vorritzanschlag (34, 42) angeordnet ist, der mit einem mit dem Motorgehäuse (2) verbundenen Anschlagelement (41) zusammenwirkt.

11. Handkreissäge nach Anspruch 10, **dadurch gekennzeichnet,** daß der Vorritzanschlag (34, 42) in Richtung Grundplatte (3) einstellbar an der Schutzhaube (33) gelagert ist.

12. Handkreissäge nach Anspruch 10 oder 11, **dadurch gekennzeichnet,** daß der Vorritzanschlag als Schwenkhebel (34) ausgebildet ist, der eine zum Anschlagelement (41) gerichtete Anlauffläche (43) aufweist, mit dem das Anschlagelement (41) zusammenwirkt.

13. Handkreissäge nach einem der Ansprüche 10 bis 12, **dadurch gekennzeichnet,** daß die Schutzhaube (33) einen Führungsschlitz (45) aufweist, in die ein mit dem Motorgehäuse (2) verbundenes Anschlagelement (41) eingreift.

## Claims

1. A method for cutting layered workpieces made of wood or similar, using a portable circular saw (1) guideable along a guide fence, having a motor casing (2) with drivable sawblade (4) which is height-adjustably mounted on a sole plate (3), and having a guide shoe (10) interacting with said guide fence (7) and mounted on said sole plate such as to permit movement transverse to the sawing direction, characterised by the process steps:
a) downward sawing through the top layer (5) of said workpiece (6) using a first pre-scoring setting of said sawblade (4),
b) downward sawing through the top layer (5) of said workpiece (6) using a second pre-scoring setting of said sawblade (4) shifted in relation to said first pre-scoring setting and transverse to the direction of sawing,
c) upward cutting through the entire cross-section of said workpiece (6) using a cutting setting of said sawblade (4) located between said first and second pre-scoring settings of said sawblade (4).

2. A portable circular saw for implementation of the method according to Claim 1, **characterised in that** a bracket (11) is connected to said sole plate (3) of said portable circular saw (1), on which bracket said guide shoe (10) with guide channel (9) is mounted such as to permit transverse movement in relation to said sawblade (4).

3. A portable circular saw according to Claim 2,
**characterised in that** an adjusting element (14) is provided between said bracket (11) and said guide shoe (10).

4. A portable circular saw according to Claim 3,
**characterised in that** said adjusting element (14) is designed as a threaded pin engaging in a female thread (13) of said bracket (11).

5. A portable circular saw according to one of Claims 2 to 4,
**characterised in that** a spring element (18) is provided between said bracket (11) and said guide shoe (10).

6. A portable circular saw according to one of Claims 2 to 5,
**characterised in that** a setting plate (19) transversely movable in relation to said sawblade (4) is disposed between said bracket (11) and said guide shoe (10) and is mounted on said sole plate (3) such as to permit setting using said adjusting element (14), and in that said guide shoe (10) is mounted on said setting plate (19) transversely movable to said sawblade (4) and lockable.

7. A portable circular saw according to Claim 6,
**characterised in that** stop elements (24) are connected to said guide shoe (10) and serve as a stop and to indicate the angle in conjunction with an angle scale (27).

8. A portable circular saw according to one of Claims 2 to 7,
**characterised in that** a side wall (30) of said guide channel (9) has in some places a thinner cross-section (29) with which a setting screw (31) interacts to affect the running play between said guide shoe (10) and said guide fence (7).

9. A portable circular saw according to Claim 8,
**characterised in that** at least one insert (28) of elastic plastic is attached inside said guide shoe (10) in the vicinity of said side wall (30) and has a thinner cross-section (29) on a side wall (30) facing said guide channel (9), said setting screw (31) interacting with said cross-section (29).

10. A portable circular saw according to one of Claims 2 to 9,
having a protective hood (33) firmly connected to said sole plate (3), **characterised in that** a pre-scoring stop (34, 42) is disposed on said protective hood (33) and interacts with a stop element (41) connected to said motor casing (2).

11. A portable circular saw according to Claim 10,
**characterised in that** said pre-scoring stop (34, 42) is mounted on said protective hood (33) such as to permit adjustment in the direction of said sole plate (3).

12. A portable circular saw according to Claim 10 or 11,
**characterised in that** said pre-scoring stop is designed as a swing lever (34) having a contact face (43) facing said stop element (41) and with which face said stop element (41) interacts.

13. A portable circular saw according to one of Claims 10 to 12,
**characterised in that** said protective hood (33) has a guide slot (45) in which engages a stop element (41) connected to said motor casing (2).

## Revendications

1. Procédé destiné à la coupe de pièces stratifiées en bois ou similaires, avec une scie circulaire à main (1) guidable le long d'un guide, avec un carter de moteur (2) avec lame de scie entraînable (4), laquelle est montée sur une plaque d'assise (3) réglable en hauteur et avec un sabot de guidage (10) opérant conjointement avec le guide (7), monté sur la plaque d'assise et déplaçable perpendiculairement au sens de sciage, caractérisé par les phases de procédé suivantes:
a) Sciage de la couche de recouvrement (5) de la pièce (6) en synchronisation avec une première position d'incision de la lame de scie (4)
b) Sciage de la couche de recouvrement (5) de la pièce (6) en synchronisation avec une deuxième position d'incision de la lame de scie (4) décalée par rapport à la première position d'incision et perpendiculaire au sens de sciage
c) Coupe de la section totale de la pièce (6) en sens opposé à une position de coupe de la lame de scie (4) se situant entre la première et la deuxième position d'incision.

2. Scie circulaire à main pour l'exécution du procédé conforme à la revendication n° 1, **caractérisée en ce qu** ' une console (11) est reliée à la plaque d'assise (3) de la scie circulaire à main (1), console sur laquelle est monté le sabot de guidage (10) et sa goulotte de guidage déplaçable perpendiculairement à la lame de scie (4).

3. Scie circulaire à main suivant la revendication n° 2, **caractérisée en ce qu'**un organe de réglage (14) est prévu entre la console (11) et le sabot de guidage (10).

4. Scie circulaire à main suivant la revendication n° 3, **caractérisée en ce que** l'organe de réglage (14) est conçu sous forme d'axe fileté qui s'engage dans un filet d'écrou (13) de la console (11).

5. Scie circulaire à main suivant l'une des revendications n° 2 à 4, **caractérisée en ce qu'**un élément ressort (18) est prévu la console (11) et le sabot de guidage (10).

6. Scie circulaire à main suivant l'une des revendications n° 2 à 5, **caractérisée en ce que,** entre la console (11) et le sabot de guidage (10) est disposée une plaque de réglage (19) déplaçable perpendiculairement à la lame de scie (4), plaque qui est montée sur la plaque d'assise (3) et peut être réglée à l'aide de l'organe de réglage (14) et en ce que le sabot de guidage (10) est monté sur la plaque de réglage (19) et peut être déplacé et fixé perpendiculairement à la lame de scie (4).

7. Scie circulaire à main suivant la revendication n° 6, **caractérisée en ce que** des éléments de butée sont reliés au sabot de guidage (10), éléments qui servent d'indicateur de butée et d'angle à l'aide d'une échelle d'angle (27).

8. Scie circulaire à main suivant l'une des revendications n° 2 à 7, **caractérisée en ce qu'**une paroi latérale (30) de la goulotte de guidage (9) présente en partie une section réduite (29) avec laquelle agit conjointement une vis de réglage (31) pour influer sur le jeu existant entre le sabot de guidage (10) et le guide (7).

9. Scie circulaire à main suivant la revendication n° 8, **caractérisée en ce qu'**est fixé dans le sabot de guidage (10), au niveau de la paroi latérale (30), au moins un insert (28) en matière plastique élastique qui présente, sur une paroi latérale (30) dirigée vers la goulotte de guidage (9), une section réduite (29) avec laquelle agit conjointement la vis de réglage (31).

10. Scie circulaire à main suivant l'une des revendications n° 2 à 9, avec un capot de protection solidaire de la plaque d'assise (3), **caractérisée en ce qu'une** butée d'incision (34, 42) est disposée sur le capot protecteur (33), butée qui agit conjointement avec un élément de butée (41) relié au carter de moteur (2).

11. Scie circulaire à main suivant la revendication n° 10, **caractérisée en ce que** la butée d'incision (34, 42) est montée en direction de la plaque d'assise (3) et peut être réglée sur le capot protecteur (33).

12. Scie circulaire à main suivant la revendication n° 10 ou 11, **caractérisée en ce que** la butée d'incision est conçue sous forme de levier pivotant (34) qui présente une surface d'arrêt (43) dirigée vers l'élément de butée (41), avec laquelle l'élément de butée (41) agit conjointement.

13. Scie circulaire à main suivant l'une des revendications n° 10 à 12, **caractérisée en ce que** le capot protecteur (33) présente une fente de guidage (45) dans laquelle s'engage un élément de butée (41) relié au carter de moteur (2).
